# EUROPEAN PATENT APPLICATION

(11) **EP 4 333 110 A1**
(43) Date of publication of application: **06.03.2024**
(21) Application number: 22795387.4
(22) Date of filing: 23.03.2022
(51) Int. Cl.: H01M 4/134, H01M 10/052, H01M 10/0562, H01M 10/0585

(54) **LITHIUM SECONDARY BATTERY**

(30) Priority: 28.04.2021 JP 2021076145; 28.12.2021 JP 2021214292
(71) Applicant: NISSAN MOTOR CO., LTD., Kanagawa 221-0023 (JP)
(72) Inventor: SAITO, Naoto, Atsugi-shi, Kanagawa 243-0123 (JP); OTSUKA, Yusuke, Atsugi-shi, Kanagawa 243-0123 (JP)
(74) Representative: Grünecker Patent- und Rechtsanwälte PartG mbB
(86) International application number: PCT/JP2022/013657
(87) International publication number: WO 2022/230468

(57) **Abstract**

Provided is a means capable of more reliably suppressing growth of dendrites in a lithium-precipitation type lithium secondary battery.

In a lithium secondary battery including a lithium-precipitation type power-generating element, an ion conductive reaction suppressing layer that has lithium ion conductivity and suppresses reaction between lithium metal and a solid electrolyte is provided on a region where a positive electrode active material layer faces the negative electrode current collector, which is on a negative electrode current collector side of a surface of a solid electrolyte layer facing the negative electrode current collector, and an ion permeation suppressing layer that suppresses permeation of lithium ions is provided on an outer peripheral side of the ion conductive reaction suppressing layer.

## Description

### TECHNICAL FIELD

The present invention relates to a lithium secondary battery.

### BACKGROUND ART

In recent years, in order to fight global warming, there is a strong need for reduction of the amount of carbon dioxide emissions. In the automobile industry, there are increasing expectations for a reduction of carbon dioxide emissions by introduction of electric vehicles (EV) and hybrid electric vehicles (HEV), and development of non-aqueous electrolyte secondary batteries such as secondary batteries for motor driving, which are key to practical application of such vehicles, has been actively conducted.

A secondary battery for motor driving is required to have extremely high output characteristics and high energy as compared with a lithium ion secondary battery for consumer use used in a mobile phone, a notebook computer, and the like. Therefore, a lithium ion secondary battery having the highest theoretical energy among all practical batteries has attracted attention, and is currently being rapidly developed.

Here, lithium ion secondary batteries that are currently widespread use a combustible organic electrolyte solution as an electrolyte. In such liquid-based lithium ion secondary batteries, safety measures against liquid leakage, short circuit, overcharge, and the like are more strictly required than other batteries.

Therefore, in recent years, research and development on an all-solid lithium secondary battery using an oxide-based or sulfide-based solid electrolyte as an electrolyte have been actively conducted. The solid electrolyte is a material mainly made of an ion conductor that enables ion conduction in a solid. For this reason, in an all-solid lithium secondary battery, in principle, various problems caused by combustible organic electrolyte solution do not occur unlike the conventional liquid-based lithium ion secondary battery. In general, use of a high-potential and large-capacity positive electrode material and a large-capacity negative electrode material can achieve significant improvement in output density and energy density of a battery.

Conventionally, as one type of all-solid-state lithium secondary batteries, a so-called lithium-precipitation type in which lithium metal is precipitated on a negative electrode current collector in a charging process is known (see, e.g., U.S. Patent Application Publication No. 2019/0157723). In the charging process of such a lithium-precipitation type all-solid-state lithium secondary battery, lithium metal is precipitated between the solid electrolyte layer and the negative electrode current collector. U.S. Patent Application Publication No. 2019/0157723 discloses a technique in which a fine particle layer including fine particles of amorphous carbon, silicon, silver, tin, aluminum, bismuth, or the like is disposed between a negative electrode current collector and a solid electrolyte layer constituting a power-generating element of a lithium secondary battery. According to U.S. Patent Application Publication No. 2019/0157723, by adopting such a configuration, when lithium metal is precipitated between the fine particle layer and the negative electrode current collector during charging, the fine particle layer serves as a protective layer for the lithium metal layer, and growth of dendrites from the lithium metal layer is suppressed, so that a short circuit of the lithium secondary battery, a decrease in capacity due to the short circuit, and the like are prevented.

### SUMMARY OF INVENTION

### Technical Problem

However, according to the study of the present inventors, it has been found that even when the technique described in U.S. Patent Application Publication No. 2019/0157723 is used, it is still impossible to prevent the growth of dendrites in some cases.

Therefore, an object of the present invention is to provide a means capable of more reliably suppressing the growth of dendrites in a lithium-precipitation type lithium secondary battery.

### Solution to Problem

The present inventors have conducted intensive studies in order to solve the above problem. As a result, the present inventors have found that the above problem can be solved by a lithium secondary battery including a lithium-precipitation type power-generating element, in which an ion conductive reaction suppressing layer that has lithium ion conductivity and suppresses reaction between lithium metal and a solid electrolyte is provided on a region where a positive electrode active material layer faces the negative electrode current collector, which is on a negative electrode current collector side of a surface of a solid electrolyte layer facing the negative electrode current collector, and an ion permeation suppressing layer that suppresses permeation of lithium ions is provided on an outer peripheral side of the ion conductive reaction suppressing layer, and have arrived at the present invention.

That is, one aspect of the present invention relates to a lithium secondary battery including a power-generating element having: a positive electrode in which a positive electrode active material layer containing a positive electrode active material capable of occluding and releasing lithium ions is disposed on a surface of a positive electrode current collector; a negative electrode that has a negative electrode current collector and in which lithium metal is precipitated on the negative electrode current collector during charging; and a solid electrolyte layer that is interposed between the positive electrode and the negative electrode and contains a solid electrolyte. The lithium secondary battery is characterized in that an ion conductive reaction suppressing layer that has lithium ion conductivity and suppresses reaction between the lithium metal and the solid electrolyte is provided on at least a part of a region where the positive electrode active material layer faces the negative electrode current collector on a main surface of the solid electrolyte layer facing the negative electrode current collector, and an ion permeation suppressing layer that suppresses permeation of lithium ions is provided on an outer peripheral side of the ion conductive reaction suppressing layer on the main surface.

### BRIEF DESCRIPTION OF DRAWINGS

FIG. 1 is a cross-sectional view schematically illustrating an overall structure of a laminate type (internal parallel connection type) all-solid lithium secondary battery (laminate type secondary battery) as one embodiment of the present invention.
FIG. 2 is an enlarged cross-sectional view of a single battery layer of the laminate type secondary battery according to one embodiment of the present invention. FIG. 2 corresponds to a configuration of an evaluation cell produced in Example 1 to be described later.
Fig. 3 is a perspective view of a laminated secondary battery according to one embodiment of the present invention.
Fig. 4 is a side view as viewed from direction A illustrated in Fig. 3.
Fig. 5 is a perspective view illustrating an appearance of a laminated secondary battery according to one embodiment of the present invention.
Fig. 6 is an enlarged cross-sectional view of a single battery layer of a laminated secondary battery according to another embodiment of the present invention.

### DESCRIPTION OF EMBODIMENTS

One aspect of the present invention is a lithium secondary battery including: a power-generating element having a positive electrode in which a positive electrode active material layer containing a positive electrode active material capable of occluding and releasing lithium ions is disposed on a surface of a positive electrode current collector; a negative electrode that has a negative electrode current collector and in which lithium metal is precipitated on the negative electrode current collector during charging; and a solid electrolyte layer that is interposed between the positive electrode and the negative electrode and contains a solid electrolyte, in which an ion conductive reaction suppressing layer that has lithium ion conductivity and suppresses reaction between the lithium metal and the solid electrolyte is provided on at least a part of a region where the positive electrode active material layer faces the negative electrode current collector on a main surface of the solid electrolyte layer facing the negative electrode current collector, and an ion permeation suppressing layer that suppresses permeation of lithium ions is provided on an outer peripheral side of the ion conductive reaction suppressing layer on the main surface. According to the present embodiment, in the lithium-precipitation type lithium secondary battery, the growth of dendrites can be more reliably suppressed.

Hereinafter, the present embodiment will be described with reference to the drawings, but the technical scope of the present invention should be determined based on the description of the claims, and is not limited to the following embodiments. The dimensional ratios of the drawings are exaggerated for convenience of description and may differ from the actual ratios.

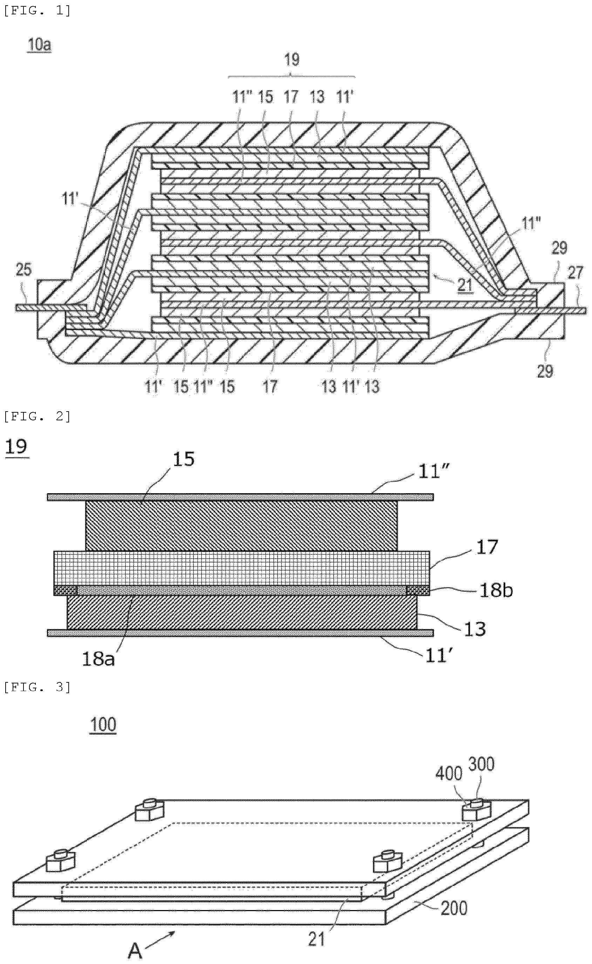

FIG. 1 is a cross-sectional view schematically illustrating an overall structure of a laminate type (internal parallel connection type) all-solid lithium secondary battery (hereinafter also simply referred to as "laminate type secondary battery") as one embodiment of the present invention. A laminate type secondary battery 10a illustrated in FIG. 1 has a structure in which a substantially rectangular shaped power-generating element 21 in which a charge and discharge reaction actually proceeds is sealed inside a laminate film 29 as the battery outer casing body. FIG. 1 shows a cross section of the laminate type secondary battery during charging, and thus a negative electrode active material layer 13 made of lithium metal is present between a negative electrode current collector 11' and a solid electrolyte layer 17. The pressurizing member (not illustrated) applies a confining pressure to the laminate type secondary battery 10a in the direction of lamination of the power-generating element 21. Accordingly, the volume of the power-generating element 21 is kept constant.

As illustrated in FIG. 1, the power-generating element 21 of the laminate type secondary battery 10a of the present embodiment has a configuration in which a negative electrode where the negative electrode active material layer 13 containing lithium metal is disposed on both surfaces of the negative electrode current collector 11', a solid electrolyte layer 17, and a positive electrode where a positive electrode active material layer 15 containing a lithium transition metal composite oxide is disposed on both surfaces of a positive electrode current collector 11" are laminated. Specifically, the negative electrode, the solid electrolyte layer, and the positive electrode are laminated in this order such that one negative electrode active material layer 13 and the positive electrode active material layer 15 adjacent thereto face each other with the solid electrolyte layer 17 interposed therebetween. Thus, the negative electrode, solid electrolyte layer, and positive electrode that are adjacent constitute one single battery layer 19. Therefore, it can be said that the laminate type secondary battery 10a illustrated in FIG. 1 has a configuration in which a plurality of single battery layers 19 is laminated to be electrically connected in parallel.

The negative electrode current collector 11' and the positive electrode current collector 11" have a structure in which a negative electrode current collecting plate 25 and a positive electrode current collecting plate 27 which are electrically connected to the respective electrodes (the negative electrode and the positive electrode) are respectively attached to the negative electrode current collector 11' and the positive electrode current collector 11" and are led to an outside of the laminate film 29 so as to be sandwiched between ends of the laminate film 29. The negative electrode current collecting plate 25 and the positive electrode current collecting plate 27 may be attached to the negative electrode current collector 11' and the positive electrode current collector 11" of the respective electrodes with a negative electrode terminal lead and a positive electrode terminal lead (not illustrated) interposed therebetween, respectively by ultrasonic welding, resistance welding, or the like as necessary.

In the above description, one embodiment of the lithium secondary battery according to one aspect of the present invention has been described by taking the laminated (internal parallel connection type) all-solid-state lithium secondary battery as an example. However, the type of lithium secondary battery to which the present invention can be applied is not particularly limited, and the present invention can also be applied to bipolar (bipolar) lithium secondary batteries.

FIG. 2 is an enlarged cross-sectional view of the single battery layer 19 of the laminate type secondary battery according to one embodiment of the present invention. As illustrated in FIG. 2, the single battery layer 19 constituting the laminate type secondary battery 10a according to the present embodiment has a positive electrode including the positive electrode current collector 11" and the positive electrode active material layer 15 disposed on the surface of the positive electrode current collector 11". Further, the solid electrolyte layer 17 containing a solid electrolyte is disposed on the surface of the positive electrode active material layer 15 on a side opposite to the positive electrode current collector 11". Here, in the embodiment shown in Fig. 2, a carbon black layer 18a containing carbon black nanoparticles is provided on a region including the entire region of the positive electrode active material layer 15 facing the negative electrode current collector 11' on a main surface of the solid electrolyte layer 17 facing the negative electrode current collector 11' (in other words, in a size larger than the positive electrode active material layer 15 when the power-generating element 21 is viewed in a plan view). Since the carbon black constituting the carbon black layer 18a has lithium ion conductivity, the carbon black layer 18a can conduct lithium ions. Therefore, the disposition of the carbon black layer 18a does not hinder the progress of the battery reaction. The carbon black layer 18a also has a function of suppressing a reaction between lithium metal (negative electrode active material layer 13) precipitated on the negative electrode current collector 11' during charging and the solid electrolyte contained in the solid electrolyte layer 17. Therefore, it can be said that the carbon black layer 18a functions as an ion conductive reaction suppressing layer.

As shown in Fig. 2, in the single battery layer 19 constituting the laminated secondary battery 10a according to the present embodiment, an alumina layer 18b containing alumina (aluminum oxide) nanoparticles is provided on the entire outer periphery of the above-described carbon black layer 18a (ion conductive reaction suppressing layer). Alumina constituting the alumina layer 18b is a material having no lithium ion conductivity. Therefore, the alumina layer 18b functions as an ion permeation suppressing layer that suppresses permeation of lithium ions.

In the embodiment shown in Fig. 2, when the power-generating element 21 is viewed in a plan view, the outer peripheral end of the lithium metal (negative electrode active material layer 13) precipitated on the negative electrode current collector 11' during charging is disposed in a manner of being positioned inside the outer peripheral end of the alumina layer 18b over the entire circumference and positioned outside the outer peripheral end of the carbon black layer 18a. With such a configuration, there is an advantage that the growth of dendrites from the outer peripheral end of the lithium metal (negative electrode active material layer 13) precipitated on the negative electrode current collector 11' during charging and the short circuit due to the contact between the dendrites and the solid electrolyte layer 17 and/or the positive electrode active material layer 15 resulting therefrom are more effectively prevented.

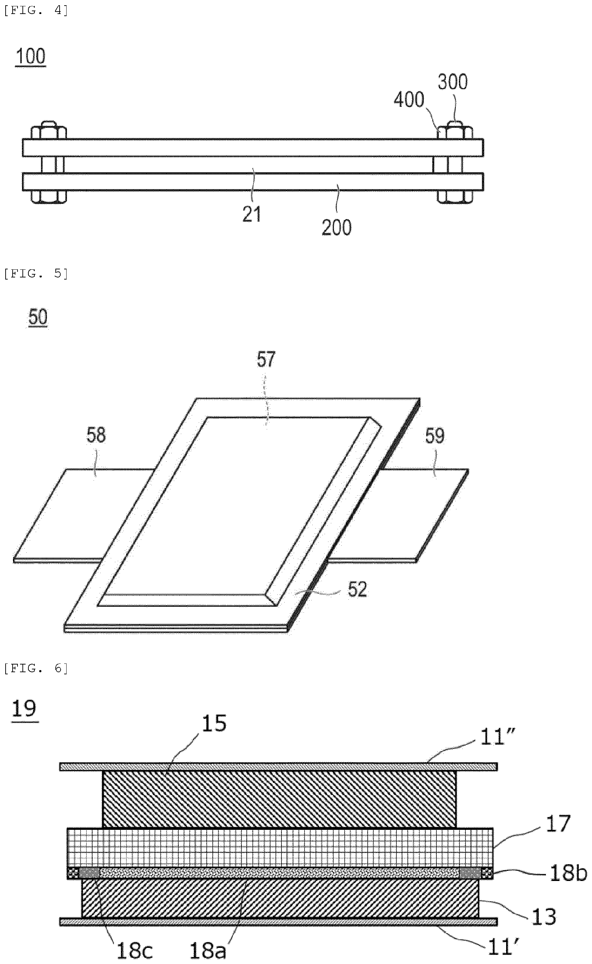

Fig. 3 is a perspective view of a laminated secondary battery according to one embodiment of the present invention. Fig. 4 is a side view as viewed from direction A illustrated in Fig. 3.

As illustrated in FIGS. 3 and 4, a laminate type secondary battery 100 according to the present embodiment includes the power-generating element 21 sealed in the laminate film 29 illustrated in FIG. 1, two metal plates 200 sandwiching the power-generating element 21 sealed in the laminate film 29, and bolts 300 and nuts 400 as fastening members. The fastening members (the bolts 300 and the nuts 400) have a function of fixing the power-generating element 21 sealed in the laminate film 29 in a state of being sandwiched by the metal plates 200. As a result, the metal plates 200 and the fastening members (the bolts 300 and the nuts 400) function as a pressurizing member that pressurizes (confines) a power-generating element 21 in a direction of lamination of the power-generating element. The pressurizing member is not particularly limited as long as the pressurizing member can pressurize the power-generating element 21 in the direction of lamination of the power-generating element. Typically, a combination of plates formed of a material having rigidity such as the metal plates 200 and the above-described fastening members is used as the pressurizing member. In addition to the bolts 300 and the nuts 400, a tension plate that fixes the end of the metal plate 200 so as to confine the power-generating element 21 in the direction of lamination of the power-generating element, or the like may be used as a fastening member.

The lower limit of the load applied to the power-generating element 21 (confining pressure in the direction of lamination of the power-generating element) is, for example, 0.1 MPa or more, preferably 1 MPa or more, more preferably 3 MPa or more, and still more preferably 5 MPa or more. The upper limit of the confining pressure in the direction of lamination of the power-generating element is, for example, 100 MPa or less, preferably 70 MPa or less, more preferably 40 MPa or less, and still more preferably 10 MPa or less.

Hereinafter, main components of the laminate type secondary battery 10a described above will be described.

### [Positive Electrode Current Collector]

The positive electrode current collector is a conductive member that functions as a flow path for electrons emitted from a positive electrode toward an external load or flowing from a power source toward the positive electrode along with the progression of the battery reaction (charge and discharge reaction). A material constituting the positive electrode current collector is not particularly limited. As the material constituting the positive electrode current collector, for example, a metal or a resin having conductivity can be adopted.

The thickness of the positive electrode current collector is not particularly limited, but is, for example, from 10 to 100 µm.

### [Positive Electrode Active Material Layer]

A positive electrode constituting the lithium secondary battery according to the present embodiment has a positive electrode active material layer containing a positive electrode active material capable of absorbing and desorbing lithium ions. The positive electrode active material layer 15 is disposed on the surface of the positive electrode current collector 11" as illustrated in FIG. 1.

The positive electrode active material is not particularly limited as long as it is a material that can desorb lithium ions in the process of charging the secondary battery and can absorb lithium ions in the process of discharging the secondary battery. In some cases, two or more kinds of positive electrode active materials may be used in combination. The content of the positive electrode active material in the positive electrode active material layer is not particularly limited, but for example, is preferably within a range of 30 to 99 mass , more preferably within a range of 40 to 90 mass , and still more preferably within a range of 45 to 80 mass .

In the lithium secondary battery according to the present embodiment, it is preferable that the positive electrode active material layer 15 further contains a solid electrolyte. Examples of the solid electrolyte include a sulfide solid electrolyte and an oxide solid electrolyte.

In a preferred embodiment of the secondary battery according to the present embodiment, the solid electrolyte preferably includes a resin solid electrolyte from the viewpoint of following the volume change of the electrode active material associated with charging and discharging. Examples of the resin solid electrolyte include fluorine resins, polyethylene oxide, polyacrylonitrile, polyacrylates, derivatives of these materials, and copolymers of these materials. Examples of the fluorine resins include fluorine resins containing vinylidene fluoride (VdF), hexafluoropropylene (HFP), tetrafluoroethylene (TFE), derivatives of these compounds, and the like as constituent units. Specific examples thereof include homopolymers such as polyvinylidene fluoride (PVdF), polyhexafluoropropylene (PHFP), and polytetrafluoroethylene (PTFE), and a binary copolymer such as a copolymer of VdF and HFP.

In another preferred embodiment of the secondary battery according to the present embodiment, the solid electrolyte is preferably a sulfide solid electrolyte containing an S element, more preferably a sulfide solid electrolyte containing a Li element, an M element, and an S element, the M element is a sulfide solid electrolyte containing at least one element selected from the group consisting of P, Si, Ge, Sn, Ti, Zr, Nb, Al, Sb, Br, Cl, and I, and still more preferably a sulfide solid electrolyte containing an S element, a Li element, and a P element, from the viewpoint of exhibiting excellent lithium ion conductivity and following the volume change of the electrode active material associated with charging and discharging. The sulfide solid electrolyte may have a Li₃PS₄ skeleton, a Li₄P₂S₇ skeleton, or a Li₄P₂S₆ skeleton. Examples of the sulfide solid electrolyte having a Li₃PS₄ skeleton include LiI-Li₃PS₄, LiI-LiBr-Li₃PS₄, and Li₃PS₄. Examples of the sulfide solid electrolyte having a Li₄P₂S₇ skeleton include a Li-P-S-based solid electrolyte called LPS. As the sulfide solid electrolyte, for example, LGPS expressed by Li₍₄₋ₓ₎Ge₍₁₋ₓ₎PₓS₄ (x satisfies 0 < x < 1) or the like may be used. More specifically, examples of the sulfide solid electrolyte include LPS(Li₂S-P₂S₅), Li₇P₃S₁₁, Li_{3.2}P_{0.96}S, Li_{3.25}Ge_{0.25}P_{0.75}S₄, Li₁₀GeP₂S₁₂, Li₆PS₅X (where X is Cl, Br, or I), and the like. The description of "Li₂S-P₂S₅" means a sulfide solid electrolyte obtained by using a raw material composition containing Li₂S and P₂S₅, and the same applies to other descriptions. Above all, the sulfide solid electrolyte has high ion conductivity and low volume modulus, and thus is preferably selected from the group consisting of LPS (Li₂S-P₂S₅), Li₆PS₅X (wherein X is Cl, Br, or I), Li₇P₃S₁₁, Li_{3.2}P_{0.96}S, and Li₃PS₄ from the viewpoint of following the volume change of the electrode active material associated with charging and discharging. The content of the solid electrolyte in the positive electrode active material layer is not particularly limited, but is, for example, preferably within a range of 1 to 70 mass , more preferably within a range of 10 to 60 mass , and still more preferably within a range of 20 to 55 mass .

### (Conductive aid and binder)

The positive electrode active material layer may further contain at least one of a conductive aid and a binder in addition to the positive electrode active material and the solid electrolyte.

The thickness of the positive electrode active material layer varies depending on the configuration of the intended lithium secondary battery, but is, for example, preferably within the range of 0.1 to 1000 µm, and more preferably within a range of 40 to 100 µm.

### [Solid Electrolyte Layer]

The solid electrolyte layer is a layer usually interposed between the positive electrode active material layer and the negative electrode current collector when fully discharged, and contains a solid electrolyte (usually as a main component). Since the specific form of the solid electrolyte contained in the solid electrolyte layer is the same as that described above, the detailed description thereof is omitted here.

The content of the solid electrolyte in the solid electrolyte layer is preferably, for example, within a range of 10 to 100 mass , more preferably within a range of 50 to 100 mass , and still more preferably within a range of 90 to 100 mass% with respect to the total mass of the solid electrolyte layer.

The solid electrolyte layer may further contain a binder in addition to the solid electrolyte described above.

The thickness of the solid electrolyte layer varies depending on the configuration of the intended lithium secondary battery, but is, for example, preferably within a range of 0.1 to 1000 µm, and more preferably within a range of 10 to 40 µm.

### [Negative Electrode Current Collector]

The negative electrode current collector is a conductive member that functions as a flow path for electrons emitted from a negative electrode toward a power source or flowing from an external load toward the negative electrode with the progression of the battery reaction (charge and discharge reaction). A material constituting the negative electrode current collector is not particularly limited. As the material constituting the negative electrode current collector, for example, a metal or a resin having conductivity can be adopted. The thickness of the negative electrode current collector is not particularly limited, but is, for example, from 10 to 100 µm.

### [Negative Electrode Active Material Layer]

The lithium secondary battery according to the present embodiment is a so-called lithium-deposition-type lithium secondary battery in which lithium metal is deposited on a negative electrode current collector in a charging process. A layer made of the lithium metal deposited on the negative electrode current collector in this charging process is a negative electrode active material layer of the lithium secondary battery according to the present embodiment. Therefore, the thickness of the negative electrode active material layer increases with the progress of the charging process, and the thickness of the negative electrode active material layer decreases with the progress of the discharging process. The negative electrode active material layer need not be present when the battery has been completely discharged. However, in some cases, a negative electrode active material layer made of a certain amount of lithium metal may be disposed when the battery has been completely discharged. The thickness of the negative electrode active material layer (lithium metal layer) when the battery has been completely discharged is not particularly limited, but is usually from 0.1 to 1000 µm.

### [Ion conductive reaction suppressing layer]

The lithium secondary battery according to the present aspect is characterized in that an ion conductive reaction suppressing layer is provided on at least a part of the region where the positive electrode active material layer faces the negative electrode current collector on the main surface of the solid electrolyte layer facing the negative electrode current collector. The ion conductive reaction suppressing layer is a layer that has lithium ion conductivity and suppresses a reaction between a lithium metal (negative electrode active material layer) and a solid electrolyte. Therefore, by providing the ion conductive reaction suppressing layer, it is possible to prevent deterioration of the solid electrolyte and a decrease in battery capacity caused by a reaction between the lithium metal (negative electrode active material layer) and the solid electrolyte without hindering the progress of the battery reaction.

Here, the phrase a material "has lithium ion conductivity" means that the lithium ion conductivity of the material at 25°C is 1 × 10⁻⁴ [S/cm] or more. On the other hand, the phrase a material "has no lithium ion conductivity" means that the lithium ion conductivity of the material at 25°C is less than 1 × 10⁻⁴ [S/cm]. In the lithium secondary battery according to the present aspect, the lithium ion conductivity at 25°C of the constituent material of the ion conductive reaction suppressing layer is 1 × 10⁻⁴ [S/cm] or more, preferably 1.5 × 10⁻⁴ [S/cm] or more, more preferably 2.0 × 10⁻⁴ [S/cm] or more, still more preferably 2.5 × 10⁻⁴ [S/cm] or more, and particularly preferably 3.0 × 10⁻⁴ [S/cm] or more.

The constituent material of the ion conductive reaction suppressing layer is not particularly limited, and various materials capable of expressing the above-described function can be employed. Examples of the constituent material of the ion conductive reaction suppressing layer include nanoparticles having lithium ion conductivity (in the present description, nanoparticles as a constituent material of the ion conductive reaction suppressing layer are also simply referred to as "first nanoparticles"). When the ion conductive reaction suppressing layer contains the first nanoparticles, a lithium secondary battery having a particularly excellent function of the ion conductive reaction suppressing layer can be provided. Here, the "nanoparticles" mean particles having an average particle diameter on a scale of nanometers (nm). The "average particle diameter" of nanoparticles refers to a 50% cumulative diameter (D50) with respect to a particle diameter (longest distance among distances between any two points on the contour line of the observed particle) measured by observing a cross section of a layer containing nanoparticles with a scanning electron microscope (SEM). The average particle diameter of the first nanoparticles is preferably 500 nm or less, more preferably 300 nm or less, still more preferably 150 nm or less, particularly preferably 100 nm or less, and most preferably 60 nm or less. In particular, when the average particle diameter of the first nanoparticles is 60 nm or less, a lithium secondary battery particularly excellent in the effect of suppressing the growth of dendrites can be provided. The lower limit of the average particle diameter of the first nanoparticles is not particularly limited, and is usually 10 nm or more, and preferably 20 nm or more.

Such first nanoparticles preferably contain, for example, one or two or more elements selected from the group consisting of carbon, gold, platinum, palladium, silicon, silver, aluminum, bismuth, tin, and zinc, and more preferably contain one or two or more of simple substances or alloys of these elements, from the viewpoint of being particularly excellent in the function as the ion conductive reaction suppressing layer. In addition, the first nanoparticles preferably contain carbon, and more preferably consist of a simple substance of carbon. Examples of the material composed of a simple substance of carbon include acetylene black, Vulcan (registered trademark), Black Pearl (registered trademark), carbon nanofiber, Ketjen Black (registered trademark), carbon nanotube, carbon nanohorn, carbon nanoballoon, and fullerene, and the like. Note that in a case where the ion conductive reaction suppressing layer contains such nanoparticles, the layer may further contain a binder.

The method for forming the ion conductive reaction suppressing layer containing the first nanoparticles as described above on the surface of the solid electrolyte layer on the negative electrode current collector side is not particularly limited, and for example, a method can be adopted in which a slurry in which the nanoparticles and a binder as necessary are dispersed in an appropriate solvent is applied to the surface of the solid electrolyte layer on the negative electrode current collector side, and the solvent is dried. Note that, in some cases, a continuous layer containing any of the above-described materials may be formed by a method such as sputtering or the like instead of the form of nanoparticles to form the ion conductive reaction suppressing layer.

The first nanoparticles as the constituent material of the ion conductive reaction suppressing layer have been described above. Further, the ion conductive reaction suppressing layer may be composed of other constituent materials. Examples of other constituent materials include one or two or more lithium-containing compounds selected from the group consisting of lithium halide (lithium fluoride (LiF), lithium chloride (LiCl), lithium bromide (LiBr), lithium iodide (LiI)), a composite metal oxide represented by Li-M-O (M is one or two or more metal elements selected from the group consisting of Mg, Au, Al, Sn, and Zn), and a Li-Ba-TiO₃ composite oxide. All of these materials are more stable in reductive decomposition due to contact with lithium metal than the solid electrolyte. That is, when the tendency of the solid electrolyte constituting the solid electrolyte layer to undergo reductive decomposition due to contact with lithium metal is compared with the tendency of the lithium-containing compound as the constituent material of the ion conductive reaction suppressing layer to undergo reductive decomposition due to contact with lithium metal, the latter tendency is smaller. Therefore, the lithium-containing compound can also function as an ion conductive reaction suppressing layer. The method for forming the ion conductive reaction suppressing layer containing such a lithium-containing compound is also not particularly limited, and for example, a continuous layer containing the above-described lithium-containing compound can be formed by a method such as sputtering or the like to form the ion conductive reaction suppressing layer.

The average thickness of the ion conductive reaction suppressing layer is not particularly limited, and the ion conductive reaction suppressing layer may be disposed at a thickness capable of exerting the above-described function. However, when the average thickness of the ion conductive reaction suppressing layer is too large, the internal resistance is increased, which is a factor that reduces charge and discharge efficiency. Therefore, the average thickness of the ion conductive reaction suppressing layer is preferably smaller than the average thickness of the solid electrolyte layer. When the average thickness of the ion conductive reaction suppressing layer is too small, there is a possibility that the reaction suppressing effect by providing the ion conductive reaction suppressing layer cannot be sufficiently obtained. From these viewpoints, when the ion conductive reaction suppressing layer is a layer containing the first nanoparticles, the average thickness of the ion conductive reaction suppressing layer is preferably 300 nm to 20 um inclusive, more preferably 500 nm to 15 um inclusive, and still more preferably 1 um to 10 um inclusive. When the layer is a continuous layer made of a lithium-containing compound or the like formed by a method such as sputtering or the like, the thickness is preferably 0.5 nm to 20 nm inclusive. Note that, the "average thickness" of the ion conductive reaction suppressing layer means a value calculated as an arithmetic average value of the thicknesses measured respectively at several to several tens of different portions of the ion conductive reaction suppressing layer constituting the lithium secondary battery.

### [Ion permeation suppressing layer]

The lithium secondary battery according to the present aspect is also characterized in that, as shown in Fig. 2, the ion permeation suppressing layer is provided on the outer peripheral side of the above-described ion conductive reaction suppressing layer on the main surface of the solid electrolyte layer facing the negative electrode current collector. The ion permeation suppressing layer is a layer that suppresses permeation of lithium ions. Therefore, by providing the ion permeation suppressing layer, it is possible to prevent the growth of dendrites through the outer peripheral portion of the ion conductive reaction suppressing layer and a short circuit caused by the growth of dendrites.

The constituent material of the ion permeation suppressing layer is not particularly limited, and various materials capable of expressing the above-described function can be adopted. The constituent material of the ion permeation suppressing layer is preferably a material having no lithium ion conductivity. In the lithium secondary battery according to the present aspect, the lithium ion conductivity at 25°C of the constituent material of the ion permeation suppressing layer is less than 1 × 10⁻⁴ [S/cm], and is preferably 1 × 10⁻⁵ [S/cm] or less, more preferably 1 × 10⁻⁶ [S/cm] or less, still more preferably 1 × 10⁻⁷ [S/cm] or less, and particularly preferably 1 × 10⁻⁸ [S/cm] or less. When the lithium ion conductivity of the constituent material of the ion permeation suppressing layer is a value within these ranges, the effect of suppressing the permeation of lithium ions is particularly large. As a relative relationship between the lithium ion conductivity of each of the constituent material of the ion conductive reaction suppressing layer and the constituent material of the ion permeation suppressing layer, the lithium ion conductivity (25°C) of the constituent material of the ion conductive reaction suppressing layer is preferably 10 times or more, more preferably 100 times or more, still more preferably 300 times or more, and particularly preferably 500 times or more the lithium ion conductivity (25°C) of the constituent material of the ion permeation suppressing layer. When the lithium ion conductivity of each material is different to this extent, it can be said that the lithium ion conductivity is preferable as a constituent material of each layer.

Examples of the constituent material of the ion permeation suppressing layer include nanoparticles having no lithium ion conductivity (in the present description, nanoparticles as a constituent material of the ion permeation suppressing layer are also simply referred to as "second nanoparticles"). Since the ion permeation suppressing layer contains the second nanoparticles, a lithium secondary battery having a particularly excellent function of the ion permeation suppressing layer can be provided. The average particle diameter of the second nanoparticles is preferably 500 nm or less, more preferably 300 nm or less, still more preferably 150 nm or less, still more preferably 100 nm or less, particularly preferably 70 nm or less, and most preferably 40 nm or less. In particular, when the average particle diameter of the second nanoparticles is 40 nm or less, a lithium secondary battery particularly excellent in the effect of suppressing the growth of dendrites can be provided. The lower limit of the average particle diameter of the second nanoparticles is not particularly limited, and is usually 10 nm or more, and preferably 20 nm or more.

From the viewpoint that lithium ion conductivity is low and the growth of dendrites can be effectively suppressed, the second nanoparticles preferably contain an oxide or nitride of a metal. Examples of such oxides or nitrides of a metal include oxides or nitrides of a metal such as aluminum, silicon, magnesium, calcium, potassium, tin, sodium, boron, titanium, lead, zirconium, and yttrium, and the like. Among them, it is preferable that the second nanoparticles contain oxides of these metals, and it is more preferable that the second nanoparticles contain an oxide of aluminum (aluminum oxide; alumina) or an oxide of silicon (silicon oxide; silica), and it is still more preferable that the second nanoparticles contain alumina. Note that in a case where the ion permeation suppressing layer contains such nanoparticles, the layer may further contain a binder.

The method for forming the ion permeation suppressing layer containing the second nanoparticles as described above on the outer peripheral side of the ion conductive reaction suppressing layer on the surface of the solid electrolyte layer on the negative electrode current collector side is not particularly limited, and for example, a method can be adopted in which a slurry in which the nanoparticles and a binder as necessary are dispersed in an appropriate solvent is applied on the outer peripheral side of the ion conductive reaction suppressing layer on the surface of the solid electrolyte layer on the negative electrode current collector side, and the solvent is dried. Note that, in some cases, a continuous layer containing any of the above-described materials may be formed by a method such as sputtering or the like instead of the form of nanoparticles to form the ion permeation suppressing layer.

In some cases, the ion permeation suppressing layer may be formed of an inorganic powder such as S-B-Na-based glass frit and the like, a resin material, or a rubber material. In particular, since the resin material and the rubber material have elasticity, for example, even when an internal stress is generated in a region where the ion permeation suppressing layer is formed, the ion permeation suppressing layer is stretched without being broken, so that occurrence of a short circuit can be effectively prevented.

Further, from the viewpoint of further improving the effect of the present invention, as shown in Fig. 6, it is preferable that a mixed layer 18c in which both a constituent material of the ion conductive reaction suppressing layer and a constituent material of the ion permeation suppressing layer coexist at a concentration of 1 vol% or more is present at an interface between the carbon black layer (ion conductive reaction suppressing layer) 18a and the alumina layer (ion permeation suppressing layer) 18b. Note that the presence or absence of the mixed layer 18c can be determined by observing a cross section of the lithium secondary battery in the lamination direction of the power-generating elements using SEM/EDX, and when there is a region in which both the constituent materials of the carbon black layer and the alumina layer are contained at a concentration of 1 vol% or more, the region can be recognized as a mixed layer. Here, in the charging process of the laminated secondary battery (lithium secondary battery) 10a, lithium ions having passed through the solid electrolyte layer 17 and the carbon black layer 18a from the positive electrode side are precipitated as metal lithium to form the negative electrode active material layer 13. The outer peripheral end of the negative electrode active material layer 13 made of the metal lithium may protrude to the portion where the alumina layer (ion permeation suppressing layer) 18b exists under the influence of the restraint pressure applied in the lamination direction of the battery. At this time, the metal lithium positioned on the portion where the alumina layer (ion permeation suppressing layer) 18b exists cannot move to the positive electrode side as lithium ions in the discharge process. Therefore, this metal lithium becomes dead lithium as it is and remains on the negative electrode active material layer 13, and as a result, the charge and discharge efficiency decreases. On the other hand, in the laminated secondary battery 10a having the configuration shown in Fig. 6, metal lithium that protrudes and precipitates up to the portion where the alumina layer (ion permeation suppressing layer) 18b exists in the charging process is reduced, and as a result, the generation of dead lithium and the decrease in charge and discharge efficiency caused by the generation of dead lithium can also be reduced.

The concentration of the constituent material of the ion conductive reaction suppressing layer and the concentration of the constituent material of the ion permeation suppressing layer in the mixed layer 18c may be both 1 vol% or more, and are both preferably 5 vol% or more, more preferably 10 vol% or more, and still more preferably 15 vol% or more. On the other hand, the upper limit value of the concentration of each constituent material in the mixed layer 18c is not particularly limited, and is usually both 50 vol% or less. In addition, in Fig. 6, the mixed layer 18c is provided as a layer different from the carbon black layer 18a and the alumina layer 18b, but in the mixed layer 18c, the concentration of the constituent material of the carbon black layer (ion conductive reaction suppressing layer) 18a and the concentration of the constituent material of the alumina layer (ion permeation suppressing layer) 18b preferably change with a gradient. Here, the phrase the concentrations of each of the constituent materials "change with a gradient" means that there is a region where the concentration of one constituent material increases while the concentration of the other constituent material decreases from one of the ion conductive reaction suppressing layer and the ion permeation suppressing layer toward the other. Preferably, there is a region where the concentration of the constituent material of the ion permeation suppressing layer increases while the concentration of the constituent material of the ion conductive reaction suppressing layer decreases from the ion conductive reaction suppressing layer toward the ion permeation suppressing layer. With such a configuration, the amount of metal lithium precipitated in the vicinity of the interface between the ion conductive reaction suppressing layer and the ion permeation suppressing layer in the charging process can be gradually reduced toward the outer peripheral end side of the battery, so that the generation of dead lithium and the decrease in charge and discharge efficiency caused by the generation of dead lithium can be more effectively suppressed.

The width of the mixed layer is preferably 0.5 mm or more, or the ratio of the area of the mixed layer to the area of the ion conductive reaction suppressing layer (mixed layer area ratio) when the power-generating element is viewed in a plan view is preferably 1% or more. Also with such a configuration, it is possible to more effectively suppress generation of dead lithium and a decrease in charge and discharge efficiency caused by the generation of dead lithium. Note that the width of the mixed layer is preferably 0.7 mm or more, more preferably 1.0 mm or more, still more preferably 1.5 mm or more, and particularly preferably 2.0 mm or more. The area ratio of the mixed layer is preferably 1.2% or more, more preferably 1.4% or more, still more preferably 1.8% or more, particularly preferably 2.10 or more, and most preferably 2.4% or more.

Furthermore, as shown in Fig. 6, the outer peripheral end of the mixed layer when the power-generating element is viewed in a plan view is preferably positioned outside the outer peripheral end of the positive electrode active material layer. With such a configuration, it is possible to shorten the movement distance when the lithium ions existing in the vicinity of the outer peripheral end of the positive electrode active material layer move to the negative electrode side in the charging process as compared with the case where the outer peripheral end of the mixed layer is positioned inside the outer peripheral end of the positive electrode active material layer. As a result, it is possible to minimize a decrease in output characteristics of the battery.

In another embodiment, at least one (preferably both) of the ion conductive reaction suppressing layer and the ion permeation suppressing layer preferably contains a polymer having a glass transition temperature (Tg) of 30°C or less, a polymer having a weight average molecular weight (Mw) of 100,000 or more, a polymer having a benzene ring, and/or a polymer having a functional group having active hydrogen. With such a configuration, the effect of suppressing the precipitation of dendrites can be further improved. This is because the inclusion of the above-described polymers improves the adhesion of the interface between the ion conductive reaction suppressing layer and the ion permeation suppressing layer, and the generation of dendrites of metallic lithium passing through the interface can be prevented. The polymer having a glass transition temperature (Tg) of 30°C or less is highly flexible, and polymer molecules are easily spread by a restriction pressure, thus contributing to expression of the above effect. In addition, in the polymer having a weight average molecular weight (Mw) of 100,000 or more, chains of molecules are long and entanglement occurs, thus contributing to expression of the above effect. Furthermore, in the polymer having a benzene ring, crosslinking occurs due to a π-π interaction of benzene rings among molecules, thus contributing to expression of the above effect. In the polymer having a functional group having active hydrogen, the highly polar functional groups are crosslinked by an intermolecular force, thus contributing to expression of the above effect.

The type of the various polymers described above is not particularly limited, and various polymer materials that have been conventionally suitably used as binders of secondary batteries can be similarly used. Examples of the thermoplastic polymer include polybutylene terephthalate, polyethylene terephthalate, polyvinylidene fluoride (PVDF) (including a compound in which a hydrogen atom is substituted with another halogen element), polyethylene, polypropylene, polymethylpentene, polybutene, polyether nitrile, polytetrafluoroethylene, polyacrylonitrile, polyimide, polyamide, an ethylene-vinyl acetate copolymer, polyvinyl chloride, styrene-butadiene rubber (SBR), an ethylene-propylene-diene copolymer, a styrene-butadiene-styrene block copolymer and a hydrogenated product thereof, a styrene-isoprene-styrene block copolymer and a hydrogenated product thereof, an acrylic resin, and the like, for example. Among them, styrene-butadiene rubber (SBR) or an acrylic resin is preferable, and a styrene-butadiene copolymer obtained by copolymerizing a third monomer having a functional group having active hydrogen relative to styrene and butadiene is particularly preferable. However, these materials are not particularly limited. For example, methods for adjusting the glass transition temperature (Tg) and the weight average molecular weight (Mw) of polymers having various compositions are widely known. Examples of the functional group having active hydrogen include a hydroxy group, a carboxy group, a phenol group, a thiol group, an amino group, and the like. Here, the addition amount of the various polymers described above is, for example, about 1 mass% to 20 mass% inclusive, preferably 3 mass% to 10 mass% inclusive with respect to 100 mass% of the first nanoparticles or the second nanoparticles.

In a case where the ion conductive reaction suppressing layer and/or the ion permeation suppressing layer contains the polymer having a functional group having active hydrogen, the above-described effect can be more remarkably exerted by further containing a compound capable of reacting with the functional group having active hydrogen. This is because the functional groups having active hydrogen in the polymer are crosslinked by a chemical bond using a compound capable of reacting with the functional group having active hydrogen when a heat treatment is performed at the time of preparing a cell. Examples of the compound capable of reacting with the functional group having active hydrogen include epoxy compounds and isocyanate compounds, and the like.

A material constituting the current collecting plates (25 and 27) is not particularly limited, and a known highly conductive material conventionally used as a current collecting plate for a secondary battery can be used. Although not illustrated, the current collector (11''or 11') and the current collecting plate (27 or 25) may be electrically connected with a positive electrode lead or a negative electrode lead interposed therebetween.

### [Battery outer casing body]

As the battery outer casing body, a known metal can case can be used, and a bag-shaped case using a laminate film 29 containing aluminum, which can cover the power-generating element as shown in Fig. 1, can be used. Fig. 5 is a perspective view illustrating an appearance of a laminated secondary battery according to one embodiment of the present invention. As shown in Fig. 5, the flat laminated secondary battery 50 has a rectangular flat shape, and a positive electrode tab 58 and a negative electrode tab 59 for extracting electric power are extended from both sides of the battery. The power-generating element 57 is wrapped in a battery outer casing body (laminate film 52) of the laminated secondary battery 50, the periphery of the battery outer casing body is heat-sealed, and the power-generating element 57 is hermetically sealed in a state where the positive electrode tab 58 and the negative electrode tab 59 are extended to the outside. Here, the power-generating element 57 corresponds to the power-generating element 21 of the laminated secondary battery 10a illustrated in Fig. 1 described above. The power-generating element 57 is formed by laminating a plurality of single battery layers (single cells) 19 each including a positive electrode (positive electrode current collector 11'' and positive electrode active material layer 15), a solid electrolyte layer 17, and a negative electrode (negative electrode current collector 11').

Although the case where the secondary battery according to the present embodiment is an all-solid lithium secondary battery is described as an example, the lithium secondary battery according to the present embodiment need not be an all solid type. Hence, the solid electrolyte layer may further contain a conventionally known liquid electrolyte (electrolyte solution). The amount of the liquid electrolyte (electrolyte solution) that can be contained in the solid electrolyte layer is not particularly limited, but is preferably such an amount that the shape of the solid electrolyte layer formed by the solid electrolyte is maintained and liquid leakage of the liquid electrolyte (electrolyte solution) does not occur. As the liquid electrolyte (electrolyte solution), a solution containing a known lithium salt dissolved in a known organic solvent is used. The liquid electrolyte (electrolyte solution) may further contain an additive other than the organic solvent and the lithium salt. These additives may be used singly or in combination of two or more kinds thereof. The amount of the additive used in the electrolyte solution can be appropriately adjusted.

### Examples

Hereinbelow, the present invention will be described in more detail with reference to Examples. However, the technical scope of the present invention is not limited to the following Examples. Hereinafter, the operation was performed in a glove box. Further, the instruments, devices, and the like used in the glove box were sufficiently dried in advance.

### <Example 1>

### [Preparation of evaluation cell]

First, LiNi_{0.8}Mn_{0.1}Co_{0.1}O₂ as a positive electrode active material, acetylene black as a conductive aid, and a sulfide solid electrolyte (LPS (Li₂S-P₂S₅)) were weighed to have a mass ratio of 70:5:25, mixed in an agate mortar in a glove box, and then further mixed and stirred in a planetary ball mill. To 100 parts by mass of the resulting mixed powder, 2 parts by mass of styrene-butadiene rubber (SBR) (styrene: butadiene = 60: 40 (molar ratio), weight average molecular weight (Mw) 500,000) was added, and mesitylene as a solvent was added to prepare a positive electrode active material slurry. Subsequently, the positive electrode active material slurry prepared above was applied onto a surface of a stainless steel (SUS) foil as a positive electrode current collector and dried to form a positive electrode active material layer (thickness: 50 um), thereby preparing a positive electrode.

To 100 parts by mass of a sulfide solid electrolyte (LPS (Li₂S-P₂S₅)), 2 parts by mass of the same styrene-butadiene rubber (SBR) as above was added, and mesitylene as a solvent was added to prepare a solid electrolyte slurry. Subsequently, the solid electrolyte slurry prepared above was applied onto a surface of a stainless foil as a support and dried to prepare a solid electrolyte layer (thickness: 30 um) on the surface of the stainless foil. Next, the positive electrode active material layer of the positive electrode prepared as described above and the solid electrolyte layer prepared as described above were superimposed in a manner of facing each other, and then bonded together by isostatic pressing (700 MPa, 25°C, 1 min), and the stainless foil on the solid electrolyte layer side was peeled off to obtain a laminate of the positive electrode current collector and the positive electrode active material layer and the solid electrolyte layer.

On the other hand, carbon black nanoparticles were provided as a constituent material of the ion conductive reaction suppressing layer. The same styrene-butadiene rubber (SBR) as described above was added in an amount of 10 parts by mass for 100 parts by mass of the carbon black nanoparticles, and mesitylene was added as a solvent to prepare a carbon black nanoparticle slurry. Next, the carbon black nanoparticle slurry prepared above was applied onto a surface of a stainless foil as a support and dried to prepare a carbon black layer (thickness: 5 um) as an ion conductive reaction suppressing layer on the surface of the stainless foil. The outer peripheral size of the carbon black layer (ion conductive reaction suppressing layer) was slightly larger than the region where the positive electrode active material layer faces the negative electrode current collector as shown in Fig. 2. The average particle diameter (D50) of carbon black nanoparticles contained in the carbon black layer thus prepared was measured by SEM observation of a cross section of the carbon black layer, and found to be 150 nm.

Further, alumina nanoparticles were provided as a constituent material of the ion permeation suppressing layer. The same styrene-butadiene rubber (SBR) as described above was added in an amount of 10 parts by mass for 100 parts by mass of the alumina nanoparticles, and mesitylene was added as a solvent to prepare an alumina nanoparticle slurry. Next, the alumina nanoparticle slurry prepared above was applied onto a surface of a stainless foil as a support and dried to prepare an alumina layer (thickness: 5 um) as an ion permeation suppressing layer on the surface of the stainless foil. The outer peripheral size of the alumina layer (ion permeation suppressing layer) was the same as the size of the solid electrolyte layer as shown in Fig. 2. The average particle diameter (D50) of alumina nanoparticles contained in the alumina layer thus prepared was measured by SEM observation of a cross section of the alumina layer, and found to be 40 nm.

Subsequently, a stainless foil having the same size as the carbon black layer prepared above was disposed at the central portion of the exposed surface of the solid electrolyte layer of the laminate of the positive electrode current collector and the positive electrode active material layer and the solid electrolyte layer prepared above, thereby performing masking treatment. Thereafter, the solid electrolyte layer with the masked central portion and the alumina layer (ion permeation suppressing layer) prepared above were superposed on each other in a manner of facing each other, and then bonded together by isostatic pressing (700 MPa, 25°C, 1 min), and the stainless foil on the alumina layer side was peeled off, and then the stainless foil masking the solid electrolyte layer was also peeled off to form an alumina layer on the outer peripheral edge portion of the surface of the solid electrolyte layer.

Thereafter, the central portion of the exposed surface of the solid electrolyte layer of the laminate of the positive electrode current collector and the positive electrode active material layer and the solid electrolyte layer with the alumina layer formed as described above and the carbon black layer (ion conductive reaction suppressing layer) prepared as described above were superposed on each other in a manner of facing each other, and then bonded together by isostatic pressing (700 MPa, 25°C, 1 min), and the stainless foil on the carbon black layer side was peeled off to form a carbon black layer at the central portion of the solid electrolyte layer. Finally, a stainless foil as a negative electrode current collector was disposed in a manner of covering the carbon black layer and the alumina layer formed as described above, and an evaluation cell (lithium-precipitation type all-solid-state lithium secondary battery) in the form shown in Fig. 2 was prepared except that the negative electrode active material layer was not present.

### <Example 2>

An evaluation cell (lithium-precipitation type all-solid-state lithium secondary battery) of this Example was prepared by the same method as in Example 1 described above except that carbon black nanoparticles having a smaller particle size were used as a constituent material of the ion conductive reaction suppressing layer. The average particle diameter (D50) of carbon black nanoparticles contained in the carbon black layer of the evaluation cell thus prepared was measured by SEM observation of a cross section of the carbon black layer, and found to be 60 nm.

### <Comparative Example 1>

An evaluation cell (lithium-precipitation type all-solid-state lithium secondary battery) of this Comparative Example was prepared by the same method as in Example 1 described above except that neither the ion conductive reaction suppressing layer (carbon black layer) nor the ion permeation suppressing layer (alumina layer) was formed.

### <Comparative Example 2>

An evaluation cell (lithium-precipitation type all-solid-state lithium secondary battery) of this Comparative Example was prepared by the same method as in Example 1 described above except that the ion permeation suppressing layer (alumina layer) was not formed.

### <Comparative Example 3>

An evaluation cell (lithium-precipitation type all-solid-state lithium secondary battery) of this Comparative Example was prepared by the same method as in Example 2 described above except that the ion permeation suppressing layer (alumina layer) was not formed.

### <Comparative Example 4>

An evaluation cell (lithium-precipitation type all-solid-state lithium secondary battery) of this Comparative Example was prepared by the same method as in Example 1 described above except that the ion conductive reaction suppressing layer (carbon black layer) was not formed.

### [Evaluation of evaluation cell (evaluation of presence or absence of short circuit caused by dendrites)]

A positive electrode lead and a negative electrode lead were connected to each of the positive electrode current collector and the negative electrode current collector of the evaluation cell prepared above, respectively, and a charge treatment was performed at a current density of 2 [mA/cm²] or 3 [mA/cm²] from SOC 0% in a thermostatic bath at 60°C, and the presence or absence of a short circuit of the evaluation cell within 30 minutes was examined. It was determined that a short circuit occurred when the voltage of the evaluation cell decreased during the charging process. In addition, the evaluation cell determined to have an occurrence of a short circuit was disassembled, and the inside of the cell was observed. As a result, generation of dendrites due to lithium metal was confirmed in all of the evaluation cells. The results were shown in Table 1 below. Among the evaluation results shown in Table 1, those in which no short circuit occurs are indicated by "o", and those in which a short circuit occurs are indicated by "×".

**[Table 1]**

| | Ion conductive reaction suppressing layer (carbon black layer) | | Ion permeation suppressing layer (alumina layer) | | Evaluation of presence or absence of short circuit (within 30 minutes) | |
|---|---|---|---|---|---|---|
| | Presence or absence | Average particle diameter of nanoparticles D50 | Presence or absence | Average particle diameter of nanoparticles D50 | Current density 2 mA/cm² | Current density 3 mA/cm² |
| Example 1 | Presence | 150 nm | Presence | 40 nm | o | × |
| Example 2 | Presence | 60 nm | Presence | 40 nm | o | o |
| Comparative Example 1 | Absence | - | Absence | - | × | × |
| Comparative Example 2 | Presence | 150 nm | Absence | - | × | × |
| Comparative Example 3 | Presence | 60 nm | Absence | - | × | × |
| Comparative Example 4 | Absence | - | Presence | 40 nm | × | × |

According to the results shown in Table 1, it is found that according to one aspect of the present invention, by disposing the ion conductive reaction suppressing layer and the ion permeation suppressing layer positioned on the outer periphery of the ion conductive reaction suppressing layer, the growth of dendrites can be more reliably suppressed in the lithium-precipitation type lithium secondary battery as compared with the case where these layers are not disposed. In particular, it is also found that, in Example 2 in which the average particle diameter of the nanoparticles (first nanoparticles) as the constituent material of the ion conductive reaction suppressing layer is 60 nm, the generation of dendrites is also suppressed by a current treatment at a higher current density as compared with Example 1 in which the average particle diameter is 150 nm.

### <Example 3>

First, each of the carbon black nanoparticle slurry and the alumina nanoparticle slurry used in Example 2 described above was simultaneously coated using a die coater so as to have the same size as the carbon black layer and the alumina layer in Example 2 described above. Thereafter, drying was performed after a predetermined time to prepare an integrally coated body having a mixed layer having a width of 2 mm between the carbon black layer and the alumina layer. Note that with respect to the width of the mixed portion, a cross section of the prepared evaluation cell in the lamination direction was observed using SEM/EDX, and the width of the region containing a total of 1 vol% or more of both constituent materials of the carbon black layer and the alumina layer was defined as the width of the mixed portion. The ratio of the area of the mixed portion to the area of the carbon black layer in the integrally coated body was 4.8%.

Next, the integrally coated body prepared above was disposed on the exposed surface of the solid electrolyte layer of the laminate of the positive electrode current collector and the positive electrode active material layer and the solid electrolyte layer prepared in Example 2 described above. Finally, a stainless foil as a negative electrode current collector was disposed in a manner of covering the integrally coated body disposed as described above, and an evaluation cell (lithium-precipitation type all-solid-state lithium secondary battery) of this Example was prepared. Note that, in the evaluation cell thus obtained, the outer peripheral end of the mixed layer when the power-generating element was viewed in a plan view was positioned outside the outer peripheral end of the positive electrode active material layer.

### <Example 4>

An evaluation cell (lithium-precipitation type all-solid-state lithium secondary battery) of this Example was prepared by the same method as in Example 3 described above except that the time from coating to drying in the preparation of the integrally coated body was shortened. Note that the width of the mixed layer of the integrally coated body was 1 mm, and the ratio of the area of the mixed portion to the area of the carbon black layer was 2.4%.

### <Example 5>

An evaluation cell (lithium-precipitation type all-solid-state lithium secondary battery) of this Example was prepared by the same method as in Example 3 described above except that the time from coating to drying in the preparation of the integrally coated body was shortened. Note that the width of the mixed layer in the integrally coated body was 0.5 mm, and the ratio of the area of the mixed portion to the area of the carbon black layer was 1.20.

### <Example 6>

An evaluation cell (lithium-precipitation type all-solid-state lithium secondary battery) of this Example was prepared by the same method as in Example 5 described above except that the area of the electrode and the area of the carbon black layer were increased. Note that the width of the mixed layer in the integrally coated body was 0.5 mm, and the ratio of the area of the mixed portion to the area of the carbon black layer was 0.6%.

### <Example 7>

An evaluation cell (lithium-precipitation type all-solid-state lithium secondary battery) of this Example was prepared by the same method as in Example 3 described above except that the time from coating to drying in the preparation of the integrally coated body was shortened. Note that the width of the mixed layer in the integrally coated body was 0.3 mm, and the ratio of the area of the mixed portion to the area of the carbon black layer was 0.7%.

### <Example 8>

An evaluation cell (lithium-precipitation type all-solid-state lithium secondary battery) of this Example was prepared by the same method as in Example 7 described above except that the area of the electrode and the area of the carbon black layer were reduced. Note that the width of the mixed layer in the integrally coated body was 0.3 mm, and the ratio of the area of the mixed portion to the area of the carbon black layer was 1.40.

### <Example 9>

An evaluation cell (lithium-precipitation type all-solid-state lithium secondary battery) of this Example was prepared by the same method as in Example 7 described above except that the area of the electrode and the area of the carbon black layer were reduced. Note that the width of the mixed layer in the integrally coated body was 0.3 mm, and the ratio of the area of the mixed portion to the area of the carbon black layer was 1.0%.

### [Evaluation of evaluation cell (measurement of initial charge and discharge efficiency)]

A positive electrode lead and a negative electrode lead were connected to each of the positive electrode current collector and the negative electrode current collector of each of the evaluation cells prepared in Examples 2 to 9 described above, respectively, and initial charge and discharge efficiency was measured in a thermostatic bath at 60°C. Specifically, using a charge and discharge tester, in the charging process (lithium metal was precipitated on the negative electrode current collector), a constant current and constant voltage (CCCV) mode was set, and the battery was charged from 3.0 V to 4.3 V at 0.2 C. Thereafter, in the discharging process (lithium metal on the negative electrode current collector was dissolved), a constant current and constant voltage (CCCV) mode was set, and the battery was discharged from 4.3 V to 3.0 V at 0.2 C. Here, the charge capacity (battery capacity at the time of charging) and the discharge capacity (battery capacity at the time of discharging) were each measured at the time of the charge and discharge treatment of the evaluation cell. Then, the initial charge and discharge efficiency was calculated as the ratio of the battery capacity at the time of discharge to the battery capacity at the time of charge in the first cycle. The results are shown in Table 2 below.

**[Table 2]**

| | Presence or absence of mixed layer | Width of mixed layer [mm] | [Area of mixed portion]/[Area of carbon black layer] [%] | Initial charge and discharge efficiency (relative value) |
|---|---|---|---|---|
| Example 2 | Absence | - | - | 1 |
| Example 3 | Presence | 2 | 4.8 | 1.06 |
| Example 4 | Presence | 1 | 2.4 | 1.06 |
| Example 5 | Presence | 0.5 | 1.2 | 1.05 |
| Example 6 | Presence | 0.5 | 0.6 | 1.01 |
| Example 7 | Presence | 0.3 | 0.7 | 1.01 |
| Example 8 | Presence | 0.3 | 1.4 | 1.05 |
| Example 9 | Presence | 0.3 | 1.0 | 1.04 |

According to the results shown in Table 2, it is found that the presence of the mixed layer (Examples 3 to 9) improves the initial charge and discharge efficiency as compared with the case where the mixed layer is not present (Example 2). This is considered to be because the presence of the mixed layer reduces the amount of metal lithium not involved in discharge (dead lithium) among the metal lithium precipitated in the charging process.

### <Comparative Example 5>

In Comparative Example 4 described above, the composition of SBR used at the time of preparing the alumina nanoparticle slurry in forming the alumina layer was changed to styrene: butadiene: 4-vinylbenzoic acid = 60: 35: 5 (molar ratio), and the amount of the SBR added was changed to 5 mass%. In addition, an epoxy resin in a sufficient amount for reacting with the functional group having active hydrogen contained in the SBR at an equimolar amount was further added to the slurry. Then, the conditions of isostatic pressing for forming the alumina layer were changed to 700 MPa, 150°C, and 1 minute. An evaluation cell (lithium-precipitation type all-solid-state lithium secondary battery) of this Comparative Example was prepared by the same method as in Comparative Example 4 except for the above. Note that the glass transition temperature (Tg) of the SBR used in this Comparative Example was 0°C and the weight average molecular weight (Mw) was 500,000.

### <Example 10>

In Example 2 described above, SBR was not added at the time of preparing the carbon black nanoparticle slurry in forming the carbon black layer, the composition of SBR used at the time of preparing the alumina nanoparticle slurry in forming the alumina layer was changed to styrene: butadiene: 4-vinylbenzoic acid = 60: 35: 5 (molar ratio), and the added amount of SBR was changed to 5 mass%. In addition, an epoxy resin in a sufficient amount for reacting with the functional group having active hydrogen contained in the SBR at an equimolar amount was further added to the slurry. An evaluation cell (lithium-precipitation type all-solid-state lithium secondary battery) of this Example was prepared by the same method as in Example 2 except for the above.

### <Example 11>

In Example 1 described above, SBR was not added at the time of preparing the carbon black nanoparticle slurry in forming the carbon black layer, the composition of SBR used at the time of preparing the alumina nanoparticle slurry in forming the alumina layer was changed to styrene: butadiene: 4-vinylbenzoic acid = 60: 35: 5 (molar ratio), and the added amount of SBR was changed to 5 mass%. In addition, an epoxy resin in a sufficient amount for reacting with the functional group having active hydrogen contained in the SBR at an equimolar amount was further added to the slurry. An evaluation cell (lithium-precipitation type all-solid-state lithium secondary battery) of this Example was prepared by the same method as in Example 1 except for the above.

### <Example 12>

An evaluation cell (lithium-precipitation type all-solid-state lithium secondary battery) of this Example was prepared by the same method as in Example 10 described above except that the epoxy resin was not added to the alumina nanoparticle slurry, and the conditions of the isostatic pressing in forming the alumina layer were changed to 700 MPa, 25°C, and 1 minute.

### <Example 13>

An evaluation cell (lithium-precipitation type all-solid-state lithium secondary battery) of this Example was prepared by the same method as in Example 12 described above except that SBR added at the time of preparing the alumina nanoparticle slurry was changed to an acrylic copolymer having butyl acrylate: methyl methacrylate = 95: 5 (molar ratio). Note that the glass transition temperature (Tg) of the acrylic copolymer used in this example was 40°C and the weight average molecular weight (Mw) was 530,000.

### <Example 14>

An evaluation cell (lithium-precipitation type all-solid-state lithium secondary battery) of this Example was prepared by the same method as in Example 12 described above except that SBR added at the time of preparing the alumina nanoparticle slurry was changed to an acrylic copolymer having butyl acrylate: methyl methacrylate = 30: 70 (molar ratio). Note that the glass transition temperature (Tg) of the acrylic copolymer used in this example was -50°C and the weight average molecular weight (Mw) was 50,000.

### [Evaluation of evaluation cell (evaluation of presence or absence of short circuit caused by dendrites)]

The presence or absence of a short circuit in the evaluation cell was examined by the same method as described above. However, as the evaluation conditions, four evaluation conditions were used: a current density of 2 [mA/cm²], 3 [mA/cm²], or 5 [mA/cm²] within 30 minutes; or a current density of 5 [mA/cm²] within 60 minutes. The results are shown in Table 3 below.

**[Table 3]**

| | Ion conductive reaction suppressing layer (carbon black layer) | | Ion permeation suppressing layer (alumina layer) | | | | | | | Evaluation of presence or absence of short circuit (evaluation conditions: current density and time) | | | |
|---|---|---|---|---|---|---|---|---|---|---|---|---|---|
| | Presence or absence | Average particle diameter of nanoparticles D50 | Presence or absence | Average particle diameter of nanoparticles D50 | Polymer | | | | Epoxy resin | 2 mA/cm² 30 minutes | 3 mA/cm² 30 minutes | 5 mA/cm² 30 minutes | 5 mA/cm² 60 minutes |
| | | | | | Tg [°C] | Mw | Benzene ring | Functional group having active hydrogen | | | | | |
| Comparative Example 5 | Absence | - | Presence | 40 nm | 0 | 500.000 | Presence | Presence | Presence | × | × | × | × |
| Example 10 | Presence | 60 nm | Presence | 40 nm | 0 | 500.000 | Presence | Presence | Presence | o | o | o | o |
| Example 11 | Presence | 150 nm | Presence | 40 nm | 0 | 500.000 | Presence | Presence | Presence | o | o | o | o |
| Example 12 | Presence | 60 nm | Presence | 40 nm | 0 | 500.000 | Presence | Absence | Absence | o | o | o | × |
| Example 13 | Presence | 60 nm | Presence | 40 nm | 40 | 530.000 | Absence | Absence | Absence | o | o | o | × |
| Example 14 | Presence | 60 nm | Presence | 40 nm | -50 | 50.000 | Absence | Absence | Absence | o | o | × | × |

According to the results shown in Table 3, it is found that when the alumina layer (ion permeation suppressing layer) contains a polymer having a glass transition temperature (Tg) of 30°C or lower, a polymer having a weight average molecular weight (Mw) of 100,000 or more, a polymer having a benzene ring, or a polymer having a functional group having active hydrogen (Example 10 to Example 13), the growth of dendrites can be more reliably suppressed in the lithium-precipitation type lithium secondary battery as compared with the case of not containing such a polymer (Example 14). In particular, it is also found that the above effect can be more remarkably improved in a case where a polymer having a functional group having active hydrogen is contained as the polymer and a compound capable of reacting with the functional group having active hydrogen is further contained. Note that the effect of suppressing the growth of dendrites was not obtained at all in a case where the carbon black layer (ion conductive reaction suppressing layer) is not present (Comparative example 5) even though the alumina layer contains the predetermined polymer.

This application is based on Japanese Patent Application No. 2021-076145 filed on April 28, 2021 and Japanese Patent Application No. 2021 - 214292 filed on December 28, 2021, the contents of which are incorporated herein by reference in their entirety.

## Claims

1. A lithium secondary battery comprising
a power-generating element comprising:
a positive electrode in which a positive electrode active material layer containing a positive electrode active material capable of occluding and releasing lithium ions is disposed on a surface of a positive electrode current collector;
a negative electrode that comprises a negative electrode current collector and in which lithium metal is precipitated on the negative electrode current collector during charging; and
a solid electrolyte layer that is interposed between the positive electrode and the negative electrode and contains a solid electrolyte, wherein
an ion conductive reaction suppressing layer that has lithium ion conductivity and suppresses reaction between the lithium metal and the solid electrolyte is provided on at least a part of a region where the positive electrode active material layer faces the negative electrode current collector on a main surface of the solid electrolyte layer facing the negative electrode current collector, and
an ion permeation suppressing layer that suppresses permeation of lithium ions is provided on an outer peripheral side of the ion conductive reaction suppressing layer on the main surface.

2. The lithium secondary battery according to claim 1, wherein lithium ion conductivity of a constituent material of the ion conductive reaction suppressing layer is 100 times or more lithium ion conductivity of a constituent material of the ion permeation suppressing layer.

3. The lithium secondary battery according to claim 1 or 2, wherein lithium ion conductivity of a constituent material of the ion permeation suppressing layer at 25°C is less than 1 × 10⁻⁵ [S/cm].

4. The lithium secondary battery according to any one of claims 1 to 3, wherein the ion conductive reaction suppressing layer contains first nanoparticles having lithium ion conductivity, and the ion permeation suppressing layer contains second nanoparticles having no lithium ion conductivity.

5. The lithium secondary battery according to claim 4, wherein an average particle diameter of the first nanoparticles is 60 nm or less and an average particle diameter of the second nanoparticles is 40 nm or less .

6. The lithium secondary battery according to claim 4 or 5, wherein the first nanoparticles contain one or two or more kinds of elements selected from the group consisting of carbon, gold, platinum, palladium, silicon, silver, aluminum, bismuth, tin, and zinc.

7. The lithium secondary battery according to any one of claims 4 to 6, wherein the second nanoparticles contain an oxide or nitride of a metal.

8. The lithium secondary battery according to any one of claims 1 to 7, wherein the ion conductive reaction suppressing layer is provided on a region including all of the region, and the ion permeation suppressing layer is provided on an entire outer periphery of the ion conductive reaction suppressing layer.

9. The lithium secondary battery according to any one of claims 1 to 8, wherein, in a plan view of the power-generating element, an outer peripheral end of the lithium metal precipitated during charging is positioned inside an outer peripheral end of the ion permeation suppressing layer and positioned outside an outer peripheral end of the ion conductive reaction suppressing layer.

10. The lithium secondary battery according to any one of claims 1 to 9, wherein a mixed layer in which both a constituent material of the ion conductive reaction suppressing layer and a constituent material of the ion permeation suppressing layer coexist at a concentration of 1 vol% or more is present at an interface between the ion conductive reaction suppressing layer and the ion permeation suppressing layer.

11. The lithium secondary battery according to claim 10, wherein, in the mixed layer, a concentration of a constituent material of the ion conductive reaction suppressing layer and a concentration of a constituent material of the ion permeation suppressing layer change with a gradient.

12. The lithium secondary battery according to claim 10 or 11, wherein a width of the mixed layer is 0.5 mm or more, or a ratio of an area of the mixed layer to an area of the ion conductive reaction suppressing layer in a plan view of the power-generating element is 1% or more.

13. The lithium secondary battery according to any one of claims 10 to 12, wherein, in a plan view of the power-generating element, an outer peripheral end of the mixed layer is positioned outside an outer peripheral end of the positive electrode active material layer.

14. The lithium secondary battery according to any one of claims 1 to 13, wherein at least one of the ion conductive reaction suppressing layer and the ion permeation suppressing layer contains a polymer having a glass transition temperature (Tg) of 30°C or lower, a polymer having a weight average molecular weight (Mw) of 100,000 or more, a polymer having a benzene ring, and/or a polymer having a functional group having active hydrogen.

15. The lithium secondary battery according to claim 14, wherein at least one of the ion conductive reaction suppressing layer and the ion permeation suppressing layer contains the polymer having a functional group having active hydrogen and a compound capable of reacting with a functional group having active hydrogen.
